**Europäisches Patentamt**

**(19)** **European Patent Office**

**Office européen des brevets**

(11) Publication number : **0 342 725 B1**

# (12) EUROPEAN PATENT SPECIFICATION

(45) Date of publication of patent specification :
30.12.92 Bulletin 92/53

(51) Int. Cl.⁵ : **B60G 15/06**

(21) Application number : **89200982.0**

(22) Date of filing : **18.04.89**

(54) **Device for connecting a suspension to a motor vehicle body.**

(30) Priority : **19.05.88 IT 2063688**

(43) Date of publication of application :
**23.11.89 Bulletin 89/47**

(45) Publication of the grant of the patent :
**30.12.92 Bulletin 92/53**

(84) Designated Contracting States :
**DE ES FR GB SE**

(56) References cited :
**EP-A- 0 126 006**
**DE-A- 3 119 150**
**DE-A- 3 501 106**
**DE-A- 3 619 942**

(73) Proprietor : **FIAT AUTO S.p.A.**
**Corso Giovanni Agnelli 200**
**I-10135 Torino (IT)**

(72) Inventor : **Curioni, Rino**
**Via XXV Aprile**
**I-22075 Lurate Caccivio Como (IT)**
Inventor : **Zucchetti Garbin, Carlo**
**Via Cannero 10**
**I-20159 Milan (IT)**

(74) Representative : **De Carli, Erberto et al**
**ING. BARZANO' & ZANARDO MILANO S.p.A.**
**Via Borgonuovo, 10**
**I-20121 Milano (IT)**

## Description

This invention relates to a device for connecting a steered wheel suspension, of the so-called Mac-Pherson strut type formed from a damper and spring, to a motor vehicle body.

In suspensions of the said type, the damper is fixed to the wheel hub assembly and its rod is fixed to the vehicle body. The spring generally surrounds the damper.

Thus in the case of steered wheels at least that part of the damper connected to the hub assembly plus the spring must be able to rotate relative to the vehicle body. However, to reduce the force which has to be applied to the steering wheel for steering purposes it is also advisable for the damper rod to be able to rotate freely relative to the vehicle body and follow the rotation of the wheel hub assembly.

In addition, when the wheel undergoes jolting due to road irregularities the damper must be able to change its inclination, because the wheel moves vertically along a circular arc and not parallel to itself.

The strut connection devices also have to discharge onto the vehicle body the reaction of the spring and the axial and lateral forces to which the damper rod is subjected. They also have to isolate the suspension from the vehicle body.

Of known connection devices, the most satisfactory are elastic bearings, preferably of rubber, and radial and axial rolling bearings.

In some cases the rolling bearing is fixed by its inner ring to the damper rod and to the upper support disc for the spring, and by its outer ring to a rubber bearing which is itself secured to the vehicle body.

In other cases such as disclosed in DE-A-3 619 942 (corresponding to the preamble of claim 1), the rubber bearing is fixed to the damper rod to the inner ring of the rolling bearing by way of the spring upper disc, while the outer ring of the rolling bearing is fixed to the vehicle body. In addition a further rubber bearing is positioned between the spring and its upper disc.

Compared with the first method, the second has the advantage of not having to compromise in the choice of the rubber bearing characteristics, because it enables the spring reaction to be discharged directly onto the vehicle body through the rolling bearing without involving the rubber bearing.

The only purpose of this latter is therefore to absorb the loads acting on the damper and can therefore be optimised in terms of elasticity and hardness, to give improved comfort.

Document DE-A-3 119 150 discloses a device for connecting a suspension for a steered wheel to a motor vehicle body comprising a rolling contact bearing the inner and outer races of which are formed by first and second pressed metal sleeves comprising indentations. However no rubber bearing is provided for fixing to the damper rod.

Document DE-A-3 501 106 discloses an upper cup and a lower disc for constraining the elastic block, the outer race member of the rolling contact bearing also being provided with a flange for rigid connection with the vehicle body.

The object of the present invention is to provide a connection device of the type used in the second aforesaid method which obviates these problems.

In particular, the object is to provide a device which is simpler and safer to mount, is of small overall size, is of low cost and is optimised with regard to operational characteristics. This is attained by a device for connecting a steering wheel suspension to a motor vehicle body according to the features of claim 1.

By this means the rubber bearing is mounted on the damper rod and is forced into said first sleeve to remain securely within its interior, after which it is locked onto the damper rod.

Further preferred embodiments are disclosed in the dependent claims.

According to the invention, said first sleeve is fixed to the upper disc supporting the spring, so that the spring reaction is discharged through the rolling bearing and directly onto the vehicle body without involving the elastic bearing, which thus supports only the damper loads and can be constructed with the most suitable elasticity and hardness for this purpose, to the advantage of vehicle comfort.

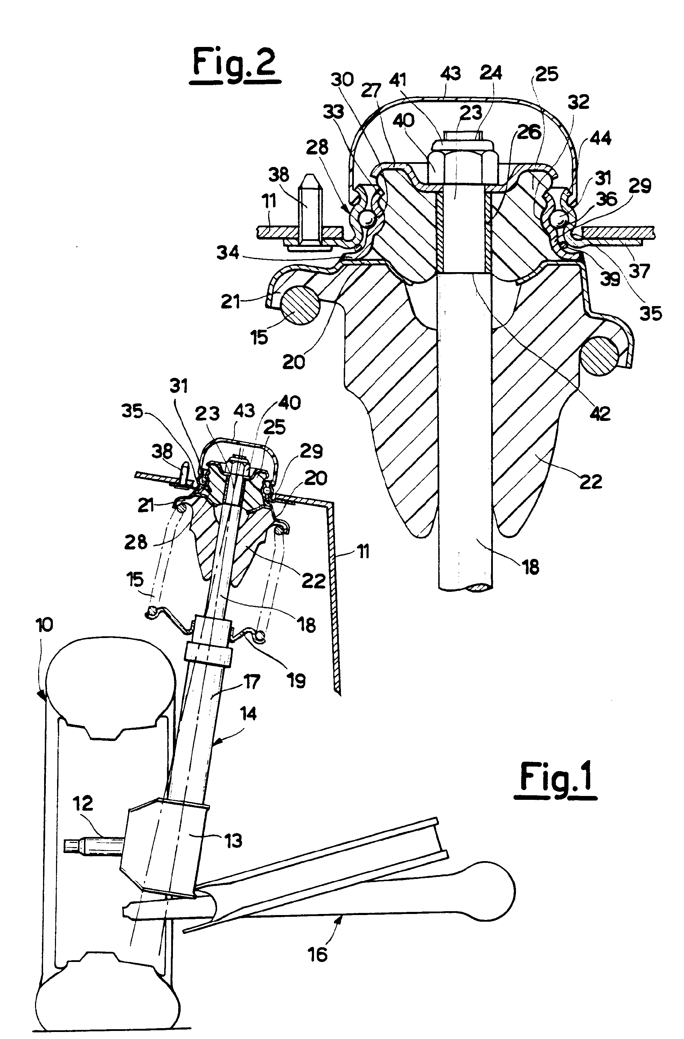

Characteristics and advantages of the invention are described hereinafter with reference to Figures 1 and 2, which illustrate a preferred embodiment of the invention by way of non-limiting example.

Figure 1 is a partly sectional front view of a vertical strut suspension constructed in accordance with the invention;

Figure 2 shows an enlarged detail of Figure 1.

In Figure 1 the reference numeral 10 indicates overall a steered wheel of a motor vehicle, of which part of the body 11 is shown. The wheel 10 is rotatably supported by its hub assembly 12, which is rigidly connected by a bracket 13 to a strut formed from a damper indicated overall by 14 and a spiral spring 15 which surrounds it. The hub assembly 12 is pivoted to a lower triangular arm indicated overall by 16 in known manner. The figure shows the damper cylinder 17 and rod 18, the lower disc 19 fixed to the cylinder 17, and the lower disc 20, these supporting the spring 15.

Between the spring 15 and disc 20 there is interposed a rubber block or elastic bearing indicated by 21, the purpose of which is to damp vibrations. In this particular case the block 21 is formed integrally with a stop buffer 22 which is also supported by the disc 20 as shown in Figure 2.

The damper rod 18 terminates upperly in a reduced-diameter pin 23 threaded at its end 24.

The reference numeral 25 indicates a rubber block or elastic bearing provided with a spacer 26 on which the rubber is vulcanised, and an upper cup 27.

The block 25 is rotatably supported in the vehicle body 11 by a ball bearing indicated overall by 28 and formed from a first pressed sheet metal sleeve 29 having a semiannular race 30 suitable for housing the balls 31.

The sleeve 29 retains the rubber of the block 25 by means of an indentation 32 represented by the actual wall of the race 30, and by its inwardly curved edge 33. The sleeve 29 is provided with a flange 34, by which it is welded to the disc 20.

The bearing 28 is formed by a further pressed sheet metal sleeve 35 which forms a semiannular race 36 for housing the balls 31 and is provided with a flange 37 fixed to the vehicle body 11 by screws 38.

A seal, for example in the form of a rubber ring 39, is interposed between the sleeves 29 and 35.

The block 25 is drawn over the pin 23 and the rubber forced into the sleeve 29 against the indentation 32 and edge 33, and is then locked onto the pin 23 by two nuts 40 and 41. In this manner the spacer 26 abuts against a shoulder 42 on the rod 18 and the block 25 rests against the disc 20.

The block 25 can also be vulcanised on the sleeve 29.

A protection cap indicated by 43 is mounted over the outwardly curved upper edge 44 of the sleeve 35.

With the described device the damper 14, including its rod 18, and the spring 15 are free to rotate within the ball bearing 28 when the wheel 10 is steered. Because of the presence of the rubber block 25 they can also oscillate with respect to the bearing 28 and thus with respect to the vehicle body 11 when the wheel undergoes vertical jolting due to road irregularities (in this respect see the two positions of the strut axis in Figure 1). The described device enables the reactions of the spring 15 and the end-of-travel impacts of the cylinder 17 against the buffer 22 to be discharged onto the vehicle body 11 by way of the ball bearing 28 without involving the block 25, which therefore only has to support the loads transmitted to the damper rod 18 and can therefore be constructed of less rigid rubber, to the advantage of comfort.

The proposed embodiment is particularly interesting in that the pressed sheet metal sleeve 29 acts both as a container for the block 25 and as the inner race for the balls 31 of the bearing 28. This results in constructional simplification to the advantage of speed and safety in mounting, operational reliability and cost and size reduction of the connection device.

## Claims

1. A connection device for connecting a suspension for a steered wheel (10) to a motor vehicle body (11), the suspension being of the strut type comprising a damper (14) fixed at its lower end to the wheel hub assembly (12) and a spring (15) which surrounds the damper and is supported by a lower spring retaining disc (19) and an upper spring retaining disc (20), said connection device comprising an elastic block (25) and a rolling contact bearing (28), said elastic block (25) being fixable to the rod (18) of the damper (14) and being rotatably supported relative to the vehicle body (11), said rolling contact bearing (28) comprising a first pressed metal sleeve (29) connected to said upper spring retaining disc (20) and formed with an indentation (32) defining simultaneously an inner bearing race (30) for the rolling bodies (31) and a means for retaining said elastic block (25), characterised in that:-
a second pressed metal sleeve (35) is provided with an indentation for defining the outer race (36) of said rolling contact bearing and a flange (37) rigidly connected to the vehicle body (11);
and in that said elastic block (25) is further constrained by an inwardly extending portion of said upper spring retaining disc (20), an upper retaining cup (27), and an inwardly curved edge (33) formed in the upper end portion of said first pressed metal sleeve (29).

2. A connection device as claimed in claim 1, characterised in that said first sleeve (29) is provided with a connection flange (34) welded to the upper disc (20) which supports the spring (15).

3. A connection device as claimed in claim 1, characterised in that a second elastic bearing (21) is interposed between said spring (15) and upper disc (20).

4. A connection device as claimed in claim 1, characterised in that a stop buffer (22) is mounted on said rod (18) and is supported by the upper disc (20) of the spring (15).

5. A connection device as claimed in claims 3 and 4, characterised in that said second elastic bearing (21) is formed integrally with said stop buffer (22).

## Patentansprüche

1. Vorrichtung zum Befestigen einer Radaufhängung eines gelenkten Rades (10) an einer Kraftfahrzeug-Karosserie (11), wobei die Aufhängung eine Federbein-Bauart aufweist und einen Stoßdämpfer (14) umfaßt, der mit seinem unteren Ende an der Radnaben-Anordnung (12) befestigt ist sowie eine Feder (15), die den Stoßdämpfer umgibt und durch eine untere Feder-Haltescheibe (19) und eine obere Feder-Haltescheibe (20) gelagert ist, wobei die Vorrichtung ferner einen elastischen Block (25) umfaßt sowie ein Wälzlager (28), wobei der elastische Block (25) an der Kolbenstange (18) des Stoßdämpfers (14) befestigt und relativ zur Fahrzeugkarosserie (11) drehbar gelagert ist und das Wälzlager (28) eine erste, gepreßte metallische Hülse (29) umfaßt, die mit der oberen Feder-Haltescheibe (20) verbunden und mit einer Vertiefung (32) versehen ist, die gleichzeitig die innere Wälzkörper-Laufbahn (30) für die Wälzkörper (31) bildet und eine Einrichtung zum Festhalten des elastischen Blockes (25),

daß eine zweite, gepreßte Metallhülse (35) vorhanden ist mit einer Vertiefung zum Bilden der äußeren Wälzkörper-Laufbahn (36) des Wälzlagers sowie ein Flansch (37), der fest mit der Fahrzeugkarosserie (11) verbunden ist und

daß der elastische Block (25) durch einen sich nach innen erstreckenden Abschnitt der oberen Federhaltescheibe (20) eingezwängt ist sowie durch einen oberen Haltetopf (27) und eine nach innen gebogene Kante (33), die im oberen Enabschnitt der ersten gepreßten Metallhülse (29) eingeformt ist.

**daß eine zweite, gepreßte Metallhülse (35) vor-**

**dadurch gekennzeichnet,**

2. Verbindungsvorrichtung nach Anspruch 1, dadurch gekennzeichnet, daß die erste Hülse (29) mit einem Verbindungsflansch (34) versehen ist, der an der oberen Federhaltescheibe (20) angeschweißt ist, die ihrerseits die Feder (15) lagert.

3. Verbindungsvorrichtung nach Anspruch 1, dadurch gekennzeichnet, daß ein zweites, elastisches Lager (21) zwischen der Feder (15) und der oberen Federhaltescheibe (20) liegt.

4. Verbindungsvorrichtung nach Anspruch 1, dadurch gekennzeichnet, daß an der Kolbenstange (18) ein Anschlagpuffer (22) befestigt ist, der von der oberen Federhaltescheibe (20) der Feder (15) abgestützt wird.

5. Verbindungsvorrichtung nach den Ansprüchen 3 und 4, dadurch gekennzeichnet, daß das zweite, elastische Lager einstückig mit dem Anschlagpuffer (22) ausgebildet ist.

**Revendications**

1. Dispositif de liaison destiné à assembler une suspension pour une roue directrice (10) à une caisse (11) de véhicule automobile, la suspension étant du type à jambe qui comprend un amortisseur (14) fixé par son extrémité inférieure à l'ensemble moyeu de roue (12) et un ressort (15) qui entoure l'amortisseur et est supporté par un disque inférieur (19) de retenue du ressort et par un disque supérieur (20) de retenue du ressort, ledit dispositif de liaison comprenant un bloc élastique (25) et un palier à contact de roulement (28), ledit bloc élastique (25) se fixant à la tige (18) de l'amortisseur (14) et étant supporté mobile en rotation par rapport à la caisse (11) du véhicule, ledit palier à contact de roulement (28) comprenant un premier manchon en métal embouti (29) relié audit disque supérieur (20) de retenue du ressort et muni d'un renfoncement (32) qui définit simultanément une bague intérieure (30) de roulement pour les corps roulants (31) et un moyen pour retenir ledit bloc élastique (25), caractérisé en ce que :

un second manchon en métal embouti (35) est muni d'un renfoncement pour définir la bague extérieure (36) dudit palier à contact de roulement, et une collerette (37) fixée rigidement à la caisse (11) du véhicule ;

et en ce que ledit bloc élastique (25) est en outre arrêté par une portion dudit disque supérieur (20) de retenue du ressort qui s'étend vers l'intérieur ; par une coupelle supérieure (27) de retenue, et un bord (33) recourbé vers l'intérieur, formé dans la portion d'extrémité supérieure dudit premier manchon en métal embouti (29).

2. Dispositif de liaison selon la revendication 1, caractérisé en ce que ledit premier manchon (29) est muni d'une collerette de liaison (34) soudée au disque supérieur (20) qui supporte le ressort (15).

3. Dispositif de liaison selon la revendication 1, caractérisé en ce qu'une seconde portée élastique (21) est interposée entre ledit ressort (15) et le disque supérieur (20).

4. Dispositif de liaison selon la revendication 1, caractérisé en ce qu'un tampon de butée (22) est monté sur ladite tige (18) et est supporté par le disque supérieur (20) du ressort (15).

5. Dispositif de liaison selon les revendications 3 et 4, caractérisé en ce que ladite seconde portée élastique (21) est formée d'une seule pièce avec ledit tampon de butée (22).

# Fig.2

# Fig.1